# FASCICULE DE BREVET EUROPEEN

(11) **EP 3 212 051 B1**
(45) Date de publication et mention de la délivrance du brevet: **04.11.2020**
(21) Numéro de dépôt: 15788168.1
(22) Date de dépôt: 12.10.2015
(51) Int. Cl.: A47J 45/06, A47J 27/00, B21D 51/22

(54) **PROCEDE DE REALISATION D'UN RECIPIENT DE CUISSON MUNI D'UN CANAL DE RECEPTION D'UN CAPTEUR**
VERFAHREN ZUR HERSTELLUNG EINES KOCHBEHÄLTERS MIT AUFNAHMEKANAL FÜR EINEN SENSOR
METHOD FOR PRODUCING A COOKING CONTAINER PROVIDED WITH A RECEIVING CHANNEL FOR A SENSOR

(30) Priorité: 30.10.2014 FR 1460463
(43) Date de publication de la demande: 06.09.2017
(73) Titulaire: SEB S.A., 69130 Ecully (FR)
(72) Inventeur: BRASSET, Jean-François, F-74000 Annecy (FR)
(74) Mandataire: SEB Developpement Brevets
(86) Numéro de dépôt international: PCT/FR2015/052747
(87) Numéro de publication internationale: WO 2016/066917

(56) Documents cités:
- EP-A1- 0 931 495
- WO-A1-2013/178908
- WO-A2-2011/152612

## Description

La présente invention concerne un procédé de réalisation d'un récipient de cuisson comportant un canal de réception d'un capteur, plus particulièrement d'un capteur de température. Le récipient de cuisson est destiné à être disposé sur une plaque de cuisson, un brûleur ou analogue pour la cuisson d'aliments. Le récipient de cuisson est notamment une poêle, une casserole, une sauteuse, un faitout ou un autocuiseur.

On connaît du document EP0931495 un récipient de cuisson comportant un fond, un capteur de température intégré entre le fond et une plaque perforée sertie sur le fond. Le capteur de température est relié par deux fils conducteurs à un circuit électronique pour traiter la grandeur mesurée et afficher la température. Le capteur de température et les deux fils conducteurs sont agencés dans un canal de réception réalisé dans le fond du récipient de cuisson. Le procédé de réalisation de ce canal de réception comporte les étapes :
a) Réaliser une rainure dans le fond,
b) Positionner une plaque perforée sur le fond et la sertir sur le fond par frappe, la rainure recouverte par la plaque perforée formant le canal de réception.

Cependant, le sertissage de la plaque perforée sur le fond nécessite la mise en œuvre d'une presse développant un tonnage important. Ainsi, la demanderesse a constaté, lors de l'étape de sertissage de la plaque perforée sur le fond, un affaissement de la matière du fond dans la rainure. Ainsi, les dimensions du canal de réception ne sont pas régulières sur sa largeur et sa hauteur, et également sur sa longueur. Ces variations dimensionnelles peuvent endommager le capteur et les fils conducteurs. Le document WO 2011/152612 A2 divulgue également un récipient de cuisson.

Le but de la présente invention est de remédier aux inconvénients précités et de proposer un procédé de réalisation d'un récipient de cuisson muni d'un canal de réception d'un capteur qui permette d'obtenir un canal aux dimensions maitrisées et constantes d'un récipient à l'autre.

Un autre but de l'invention est de proposer un procédé de réalisation d'un récipient de cuisson muni d'un canal de réception d'un capteur qui soit économique à mettre en œuvre.

Ces buts sont atteints avec un procédé de réalisation d'un récipient de cuisson comportant une calotte comprenant un fond, une plaque munie de perforations fixée sur le fond et un canal de réception d'un capteur, notamment d'un capteur de température, ledit canal de réception étant agencé entre le fond et la plaque perforée, caractérisé en ce qu'il comprend les étapes suivantes :
a) Réaliser la calotte par une opération de fonderie, le fond de ladite calotte comportant une rainure et des plots destinés à coopérer avec les perforations de la plaque, la rainure et les plots étant issus directement du moule mis en œuvre lors de cette opération de fonderie ;
b) Positionner la plaque perforée sur le fond en introduisant les perforations dans les plots ;
c) Sertir sur le fond la plaque perforée par frappe des plots, le canal de réception étant formé par la rainure coiffée par la plaque.

Ainsi, la calotte est réalisée par une opération de fonderie qui consiste à couler un métal ou un alliage liquide dans un moule pour produire, après refroidissement, une pièce comportant les éléments techniques nécessaires à la réalisation du récipient de cuisson, notamment la rainure et les plots pour limiter au maximum les travaux ultérieurs de finition. La rainure nécessaire pour obtenir le canal de réception est réalisée directement lors de l'opération de fonderie sans opération ultérieure.

Les plots permettent de réaliser un sertissage de la plaque perforée sur le fond par frappe en mettant en œuvre une presse développant un tonnage suffisamment faible pour ne pas déformer la rainure issue de l'opération de fonderie.

En conséquence, on obtient un procédé de réalisation d'un récipient de cuisson muni d'un canal de réception d'un capteur qui est particulièrement économique.

De préférence, la section du canal de réception est rectangulaire ou semi - circulaire.

Une telle section permet d'obtenir un canal de réception pouvant recevoir différents capteurs de température, notamment une thermistance à Coefficient de Température Négatif ou un thermocouple agencé dans une gaine tubulaire. De plus, une telle section résiste bien aux efforts induits lors du sertissage de la plaque perforée.

Avantageusement, la plus grande dimension de la section du canal de réception est comprise entre 2 et 5 millimètres, de préférence 4 millimètres.

L'épaisseur du fond d'un récipient de cuisson dont la calotte est issue de fonderie est comprise généralement entre 4 et 8 millimètres. Une telle dimension permet donc de réaliser un canal de réception compatible avec toutes les gammes de récipients de cuisson. De plus, une telle dimension permet d'obtenir une taille de canal pouvant recevoir des capteurs de température de dimension standard du commerce.

Avantageusement, le fond de la calotte présente un bord externe et un centre, et le canal de réception s'étend depuis le bord externe vers le centre sur une longueur comprise entre 50 et 70 millimètres, de préférence 60 millimètres.

Ainsi, un capteur agencé dans le fond d'un canal de réception présentant une telle longueur sera suffisamment déporté par rapport au bord de la calotte du récipient de cuisson pour détecter un paramètre, notamment une température, représentatif de l'état des aliments contenus dans le récipient, quelle que soit la taille du fond du récipient de cuisson.

De préférence, le canal de réception présente sur sa longueur une première portion s'étendant depuis le bord et présentant une section transversale S1 et une deuxième portion présentant une section transversale S2, S1 étant supérieure à S2.

Ainsi, le canal de réception du capteur présente une succession d'une première et deuxième portion. La première portion de plus grande section permet de guider le capteur lors de son introduction dans le canal de réception et la deuxième portion de plus petite section peut être ajustée à la taille du capteur pour permettre un positionnement précis, voir un léger serrage du capteur au fond du canal de réception. En conséquence, le capteur ne peut pas se déplacer et va mesurer la température du fond de manière répétitive et fiable dans le temps.

Avantageusement, la matière mise en œuvre à l'étape de réalisation de la calotte par fonderie est de l'aluminium ou un alliage d'aluminium.

L'aluminium ou un alliage d'aluminium est particulièrement adapté à être transformé par une opération de fonderie.

De préférence, la plaque comporte une face externe et chaque plot comporte une face supérieure, et les plots et les perforations sont dimensionnés pour qu'après l'opération de sertissage par frappe, les plots soient déformés dans les perforations de telle sorte que la face externe de la plaque et la face supérieure de chaque plot soient dans un même plan.

Les plots présentent une hauteur légèrement supérieure à l'épaisseur de la plaque et les plots sont assemblés dans les perforations avec un léger jeu. Lors du sertissage, les plots sont écrasés pour que la quantité de matière dépassant au-dessus de la plaque comble le jeu entre les plots et les perforations. Ainsi, on obtient directement après l'opération de sertissage un fond plat, adapté à être disposé sur une plaque de cuisson. De plus, un tel sertissage qui déforme une quantité de matière faible nécessite la mise en œuvre d'une presse développant un tonnage suffisamment faible pour ne pas déformer la rainure issue de l'opération de fonderie.

Avantageusement, les plots présentent une forme cylindrique dont le diamètre est compris entre 3 et 5 millimètres, de préférence 4 millimètres et la grille comporte des perforations circulaires adaptées à recevoir les plots.

Avantageusement, les plots présentent une hauteur égale à 1,5 fois l'épaisseur de la plaque.

Avantageusement, la plaque comporte entre 1 et 3 perforations par centimètre carré, de préférence 1.

Ces dispositions permettent de réduire le tonnage développé par la presse lors de l'opération de sertissage des plots et ainsi d'être sûr de ne pas déformer la rainure issue de l'opération de fonderie. A titre d'exemple, le sertissage d'une plaque perforée de diamètre 145 millimètres nécessite une presse développant environ 1000 tonnes de poussée.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'une calotte d'un récipient de cuisson selon un mode particulier de réalisation de l'invention.
- La figure 2 illustre une vue éclatée de la calotte illustrée à la figure 1.
- La figure 3 illustre une vue schématique en coupe partielle de la calotte et de la plaque avant assemblage des plots dans les perforations suivant la ligne III - III illustrée à la figure 1.
- La figure 4 illustre une vue schématique en coupe partielle de la calotte et de la plaque après assemblage des plots dans les perforations suivant la ligne III - III illustrée à la figure 1.
- La figure 5 illustre une vue schématique en coupe partielle de la calotte et de la plaque après sertissage des plots suivant la ligne III - III illustrée à la figure 1.

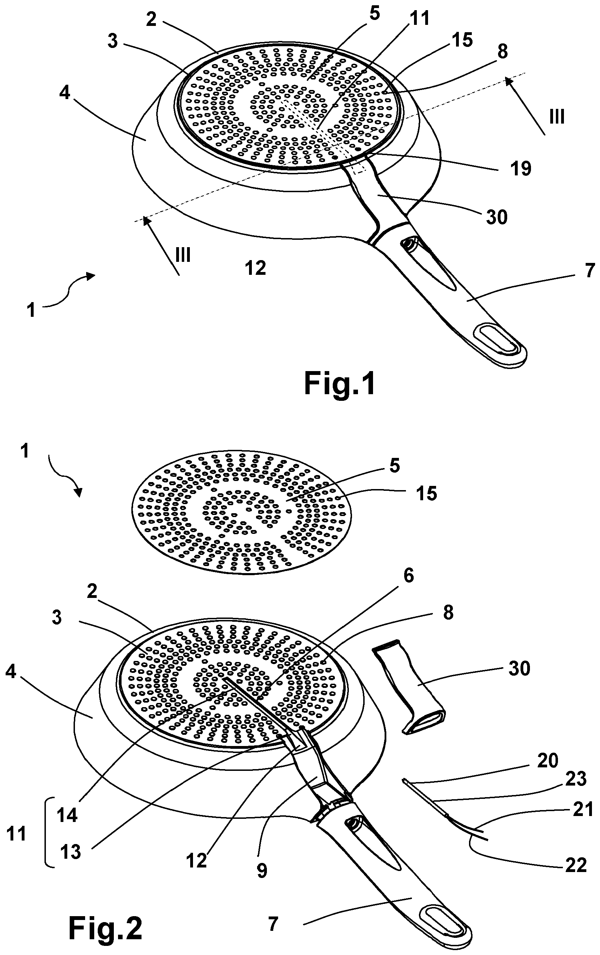

Tel que visible aux figures 1 et 2, un récipient de cuisson 1 comporte une calotte 2 qui comprend un fond 3 et une paroi latérale 4. Le fond 3 comporte des plots 8 et une plaque 5 perforée munies de perforations 15. Les plots 8 sont agencés dans les perforations 15. Un canal de réception 11 est formé par une rainure 6 ménagée dans le fond 3 et coiffée par la plaque 5 perforée.

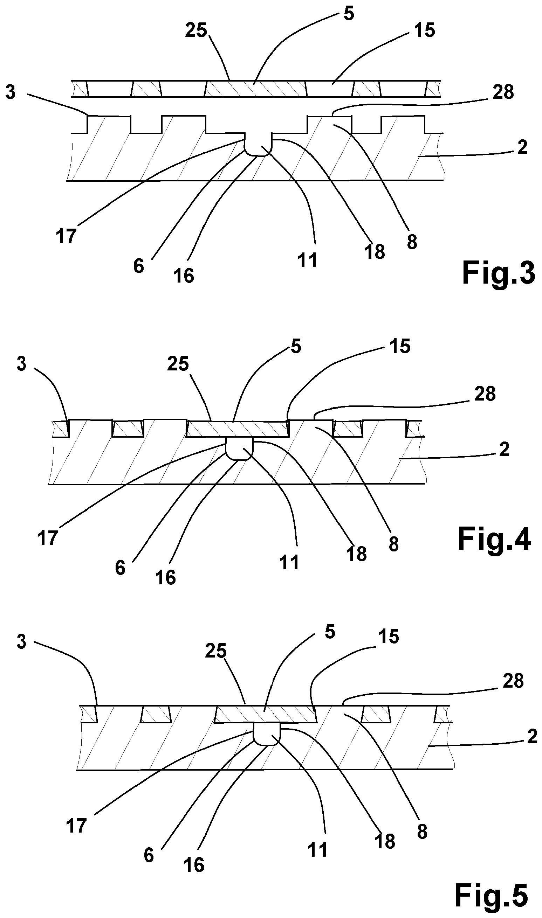

Le canal de réception 11 comporte une ouverture 12 dans la paroi latérale 4. Le canal de réception 11 s'étend, à partir de cette ouverture 12, radialement vers le centre du fond 3. Le canal de réception 11 comporte, à partir de l'ouverture 12, une première portion 13 formée par une zone chanfreinée ou évasée de la rainure 6. Le canal de réception 11 comporte une deuxième portion 14 formée par la rainure 6 réalisée dans le fond 3 dont la section transversale est sensiblement carrée. La rainure 6 comporte un fond 16 et des parois latérales 17, 18 (Fig. 3). La section carrée comporte des congés de raccordement entre le fond 16 de la rainure 6 et les parois latérales 17, 18 de la rainure.

Le capteur 20, visible sur la figure 2 est, notamment, un capteur de température, formé par une CTN ou un thermocouple. Par CTN on comprend une thermistance à Coefficient de Température Négatif. Le capteur 20 de température est muni de deux éléments conducteurs 21, 22 isolés qui sont agencés dans une gaine tubulaire 23 en acier inoxydable, obturée à une extrémité. Le capteur 20 de température est positionné au fond de la gaine tubulaire 23, à proximité de l'extrémité obturée. Les éléments conducteurs 21, 22 sont reliés électriquement à un circuit électronique (non illustré sur les figures) pour traiter la grandeur mesurée par le capteur 20 de température et afficher notamment la température.

La gaine tubulaire 23 présente un diamètre sensiblement constant sur sa longueur. Le diamètre de la gaine tubulaire est sensiblement égal au coté de la section carrée de la deuxième portion 14 du canal de réception 11 pour que la gaine tubulaire 23, une fois insérée complètement dans le canal de réception 11 soit maintenue en position de manière ajustée, quasiment sans jeu. La première portion 13 du canal de réception 11 sert de zone de guidage de la gaine tubulaire 23 lors de son introduction dans le canal de réception 11.

La paroi latérale 4 comporte une rainure 9 s'étendant à partir de l'ouverture 12 du canal de réception 11, vers le haut de la paroi latérale 4. La rainure 9 est destinée à recevoir les éléments conducteurs 21, 22, une fois la gaine tubulaire 23 introduite dans le canal de réception 11. Un capot de protection 30 est agencé sur la rainure 9 pour former un canal de protection du capteur 20 et des éléments conducteurs 21, 22.

Le récipient de cuisson 1 comporte une poignée 7 dont une extrémité est fixée sur la paroi latérale 4 par des moyens de fixation (non représentés sur les figures). Les éléments conducteurs 21, 22 et le capot de protection 30 sont agencés sur la poignée 7.

Les figures 3 à 5 illustrent les différentes étapes du procédé mis en œuvre pour la réalisation du récipient de cuisson 1 muni du canal de réception 11 du capteur 20.

La première étape du procédé consiste à réaliser la calotte 2 par une opération de fonderie, le fond 3 de la calotte 2 comportant la rainure 6 et les plots 8 destinés à coopérer avec les perforations 15 de la plaque 5. La rainure 6 et les plots 8 sont issus directement du moule mis en œuvre lors de cette opération de fonderie.

L'étape suivante du procédé consiste en une étape d'assemblage de la plaque 5 perforée sur le fond 3. Dans une première phase, la plaque 5 perforée est positionnée au-dessus du fond 3, les plots 8 étant en vis-à-vis des perforations 15 (Fig. 3). Puis, dans une deuxième phase, la plaque 5 perforée est assemblée sur le fond 3 en introduisant les perforations 15 dans les plots 8 (Fig.4).

Le procédé comporte ensuite une étape de sertissage de la plaque 5 perforée sur le fond 3 par frappe et écrasement des plots 8.

Une fois la calotte 2 formée, le procédé peut comporter une ou plusieurs étapes de traitements de surface de l'intérieur et/ou de l'extérieur de la calotte 2. Ces étapes de traitement de surface peuvent consister en un sablage, en une dépose d'un revêtement anti-adhésif ou de décoration par sérigraphie ou par pulvérisation. Le procédé peut comporter une ou plusieurs étapes de finition de la calotte 2, notamment une opération de rognage du bord de la calotte 2.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, la plaque 5 perforée pourrait avoir d'autres formes que la forme d'un disque, notamment une forme polygonale, ou celle d'un anneau. La plaque 5 perforée pourrait éventuellement être divisée en plusieurs secteurs.

## Revendications

1. Procédé de réalisation d'un récipient de cuisson (1) comportant une calotte (2) comprenant un fond (3), une plaque (5) munie de perforations (15) fixée sur le fond (3) et un canal de réception (11) d'un capteur (20), notamment d'un capteur de température, ledit canal de réception (11) étant agencé entre le fond (3) et la plaque (5) perforée, **caractérisé en ce qu'**il comprend les étapes suivantes :
a) Réaliser la calotte (2) par une opération de fonderie, le fond (3) de ladite calotte (2) comportant une rainure (6) et des plots (8) destinés à coopérer avec les perforations (15) de la plaque (5), la rainure (6) et les plots (8) étant issus directement du moule mis en œuvre lors de cette opération de fonderie ;
b) Positionner la plaque (5) perforée sur le fond (3) en introduisant les perforations (15) dans les plots (8) ;
c) Sertir sur le fond (3) la plaque (5) perforée par frappe des plots, le canal de réception (11) étant formé par la rainure (6) coiffée par la plaque (5).

2. Procédé de réalisation d'un récipient de cuisson (1) selon la revendication 1, **caractérisé en ce que** la section du canal de réception (11) est rectangulaire ou semi circulaire.

3. Procédé de réalisation d'un récipient de cuisson (1) selon la revendication 2, **caractérisé en ce que** la plus grande dimension de la section du canal de réception (11) est comprise entre 2 et 5 millimètres, de préférence 4 millimètres.

4. Procédé de réalisation d'un récipient de cuisson (1) selon l'une quelconque des revendications précédentes, **caractérisé en ce que** le fond (3) de la calotte (2) présente un bord externe (19) et un centre, et **en ce que** le canal de réception (11) s'étende depuis le bord externe (19) vers le centre sur une longueur comprise entre 50 et 70 millimètres, de préférence 60 millimètres.

5. Procédé de réalisation d'un récipient de cuisson (1) selon l'une quelconque des revendications précédentes, **caractérisé en ce que** le canal de réception (11) présente sur sa longueur une première portion (13) s'étendant depuis le bord externe (19) et présentant une section transversale S1 et une deuxième portion (14) présentant une section transversale S2, S1 étant supérieure à S2.

6. Procédé de réalisation d'un récipient de cuisson (1) selon l'une quelconque des revendications précédentes, **caractérisé en ce que** la matière mise en œuvre à l'étape de réalisation de la calotte (2) par fonderie est de l'aluminium ou un alliage d'aluminium.

7. Procédé de réalisation d'un récipient de cuisson (1) selon l'une quelconque des revendications précédentes, **caractérisé en ce que** la plaque (5) comporte une face externe (25) et chaque plot (8) comporte une face supérieure (28), et **en ce que** les plots (8) et les perforations (15) sont dimensionnés pour qu'après l'opération de sertissage par frappe, les plots (8) soient déformés dans les perforations (15) de telle sorte que la face externe (25) de la plaque (5) et la face supérieure (28) de chaque plot (8) sont dans un même plan.

8. Procédé de réalisation d'un récipient de cuisson (1) selon l'une quelconque des revendications précédentes, **caractérisé en ce que** les plots (8) présentent une forme cylindrique dont le diamètre est compris entre 3 et 5 millimètres, de préférence 4 millimètres et **en ce que** la plaque (5) comporte des perforations (15) circulaires adaptées à recevoir les plots (8).

9. Procédé de réalisation d'un récipient de cuisson (1) selon l'une quelconque des revendications précédentes, **caractérisé en ce que** les plots (8) présentent une hauteur égale à 1,5 fois l'épaisseur de la plaque (5).

10. Procédé de réalisation d'un récipient de cuisson (1) selon l'une quelconque des revendications précédentes, **caractérisé en ce que** la plaque (5) comporte entre 1 et 3 perforations par centimètre carré, de préférence 1.

11. Procédé de réalisation d'un récipient de cuisson (1) selon l'une quelconque des revendications précédentes, **caractérisé en ce que** le récipient de cuisson (1) est une poêle, une casserole, une sauteuse, un faitout ou un autocuiseur.

## Patentansprüche

1. Verfahren zur Herstellung eines Kochbehälters (1), umfassend eine Kalotte (2), die einen Boden (3) umfasst, eine mit Perforierungen (15) ausgestattete Platte (5), die auf dem Boden (3) befestigt ist, und einen Aufnahmekanal (11) eines Sensors (20), insbesondere eines Temperatursensors, wobei der Aufnahmekanal (11) zwischen dem Boden (3) und der perforierten Platte (5) eingerichtet ist, **dadurch gekennzeichnet, dass** es die folgenden Schritte umfasst:
a) Herstellung der Kalotte (2) durch einen Gießvorgang, wobei der Boden (3) der Kalotte (2) eine Nut (6) und Anhebungen (8) umfasst, die dazu vorgesehen sind, mit den Perforierungen (15) der Platte (5) zusammenzuwirken, wobei die Nut (6) und die Anhebungen (8) unmittelbar aus der während dieses Gießvorgangs eingesetzten Form hervorgehen;
b) Positionieren der perforierten Platte (5) auf dem Boden (3) durch Einführung der Perforierungen (15) in die Anhebungen (8);
c) Crimpen des Aufnahmekanals (11), der durch die von der Platte (5) bedeckten Nut (6) gebildet wird, auf dem Boden (3) der Platte (5).

2. Verfahren zur Herstellung eines Kochbehälters (1) nach Anspruch 1, **dadurch gekennzeichnet, dass** der Schnitt des Aufnahmekanals (11) rechteckig oder halbkreisförmig ist.

3. Verfahren zur Herstellung eines Kochbehälters (1) nach Anspruch 2, **dadurch gekennzeichnet, dass** die größte Abmessung des Schnitts des Aufnahmekanals (11) zwischen 2 und 5 Millimeter, vorzugsweise 4 Millimeter beträgt.

4. Verfahren zur Herstellung eines Kochbehälters (1) nach einem der vorstehenden Ansprüche, **dadurch gekennzeichnet, dass** der Boden (3) der Kalotte (2) einen Außenrand (19) und einen Mittelpunkt aufweist, und dadurch, dass der Aufnahmekanal (11) sich vom Außenrand (19) ausgehend über eine Länge zwischen 50 und 70 Millimeter, vorzugsweise 60 Millimeter, zum Mittelpunkt erstreckt.

5. Verfahren zur Herstellung eines Kochbehälters (1) nach einem der vorstehenden Ansprüche, **dadurch gekennzeichnet, dass** der Aufnahmekanal (11) über seine Länge einen ersten Abschnitt (13) aufweist, der sich vom Außenrand (19) ausgehend erstreckt und einen Querschnitt S1 aufweist, und einen zweiten Abschnitt (14), der einen Querschnitt S2 aufweist, wobei S1 größer als S2 ist.

6. Verfahren zur Herstellung eines Kochbehälters (1) nach einem der vorstehenden Ansprüche, **dadurch gekennzeichnet, dass** das im Schritt zur Herstellung der Kalotte (2) durch Gießen eingesetzte Material Aluminium oder eine Aluminiumlegierung ist.

7. Verfahren zur Herstellung eines Kochbehälters (1) nach einem der vorstehenden Ansprüche, **dadurch gekennzeichnet, dass** die Platte (5) eine Außenfläche (25) umfasst und jede Anhebung (8) eine obere Fläche (28) umfasst, und dadurch, dass die Anhebungen (8) und die Perforierungen (15) so dimensioniert ist, dass nach dem Crimpvorgang durch Schlagen die Anhebungen (8) in den Perforierungen (15) derart verformt werden, dass die Außenfläche (25) der Platte (5) und die obere Fläche (28) jeder Anhebung (8) in einer selben Ebene sind.

8. Verfahren zur Herstellung eines Kochbehälters (1) nach einem der vorstehenden Ansprüche, **dadurch gekennzeichnet, dass** die Anhebungen (8) eine zylindrische Form aufweisen, deren Durchmesser zwischen 3 und 5 Millimeter, vorzugsweise 4 Millimeter, beträgt, und dadurch, dass die Platte (5) runde Perforierungen (15) umfasst, die dazu angepasst sind, die Anhebungen (8) aufzunehmen.

9. Verfahren zur Herstellung eines Kochbehälters (1) nach einem der vorstehenden Ansprüche, **dadurch gekennzeichnet, dass** die Anhebungen (8) eine Höhe gleich dem 1,5-Fachen der Dicke der Platte (5) aufweisen.

10. Verfahren zur Herstellung eines Kochbehälters (1) nach einem der vorstehenden Ansprüche, **dadurch gekennzeichnet, dass** die Platte (5) zwischen 1 und 3 Perforierungen, vorzugsweise 1, pro Quadratzentimeter umfasst.

11. Verfahren zur Herstellung eines Kochbehälters (1) nach einem der vorstehenden Ansprüche, **dadurch gekennzeichnet, dass** der Kochbehälter (1) eine Pfanne, eine Kasserolle, eine Schmorpfanne, ein Kochtopf oder ein Schnelltopf ist.

## Claims

1. Method of producing a cooking recipient (1) consisting of a calotte bowl (2) comprising a bottom (3), a plate (5) with perforations (15) fixed on the bottom (3), and a receptor channel (11) for a sensor (20), especially a temperature sensor, said receptor channel (11) being located between the bottom (3) and the perforated plate (5), **characterised in that** it comprises the following steps:
a) Creating the calotte bowl (2) through a smelting operation, the bottom (3) of said calotte bowl (2) having a groove (6) and studs (8) intended to cooperate with the perforations (15) of the plate (5), the groove (6) and the studs (8) being directly from the moulds implemented during this smelting operation;
b) Positioning the perforated plate (5) on the bottom (3) by inserting the perforations (15) in the studs (8);
c) Fastening the perforated plate (5) to the bottom (3) by tapping the studs, the receptor channel (11) being formed by the groove (6), topped by the plate (5).

2. Method of producing a cooking recipient (1) according to claim 1, **characterised in that** the receptor channel (11) section is rectangular, or semi-circular.

3. Method of producing a cooking recipient (1) according to claim 2, **characterised in that** the largest dimension of the receptor channel (11) section is between 2 and 5 millimetres, preferably 4 millimetres.

4. Method of producing a cooking recipient (1) according to any of the preceding claims, **characterised in that** the bottom (3) of the calotte bowl (2) presents an external border (19) and a centre, and **in that** the receptor channel (11) extends from the external border (19) towards the centre, over a length comprising between 50 and 70 millimetres, preferably 60 millimetres.

5. Method of producing a cooking recipient (1) according to any of the preceding claims, **characterised in that** the receptor channel (11) presents on its length, a first portion (13) extending from the external border (19) and presenting a transversal section S1 and a second portion (14) presenting a transversal section S2, S1 being superior to S2.

6. Method of producing a cooking recipient (1) according to any of the preceding claims, **characterised in that** the material implemented at the production stage of the calotte bowl (2) by smelting is aluminium, or an aluminium alloy.

7. Method of producing a cooking recipient (1) according to any of the preceding claims, **characterised in that** the plate (5) includes an external surface (25) and each stud (8) includes an upper side (28), and that the studs (8) and perforations (15) are sized so that after the fastening of the studs by tapping, the studs (8) are deformed within the perforations (15) in such a way that the external surface (25) of the plate (5) and the upper side (28) of each stud (8) are on the same plane.

8. Method of producing a cooking recipient (1) according to any of the preceding claims, **characterised in that** the studs (8) present a cylindrical form whose diameter is comprised between 3 and 5 millimetres, preferably 4 millimetres, and **in that** the plate (5) includes circular perforation (15) adapted to receive the studs (8).

9. Method of producing a cooking recipient (1) according to any of the preceding claims, **characterised in that** studs (8) present a height equal to 1.5 times the thickness of the plate (5).

10. Method of producing a cooking recipient (1) according to any of the preceding claims, **characterised in that** the plate (5) includes between 1 and 3 perforations per centimetre squared, preferably 1.

11. Method of producing a cooking recipient (1) according to any of the preceding claims, **characterised in that** the cooking recipient (1) is a frying pan, a pot, a skillet, a stew pot, or a pressure cooker.
